# EUROPÄISCHE PATENTSCHRIFT

(11) **EP 2 225 142 B1**
(45) Veröffentlichungstag und Bekanntmachung des Hinweises auf die Patenterteilung: **13.04.2011**
(21) Anmeldenummer: 08854864.9
(22) Anmeldetag: 01.12.2008
(51) Int. Cl.: B62D 15/02, G01D 5/245

(54) **ABSOLUT MESSENDE LENKWINKELSENSORANORDNUNG**
ABSOLUTE MEASUREMENT STEERING ANGLE SENSOR ARRANGEMENT
ARRANGEMENT DE DETECTION DE L'ANGLE DE DIRECTION A MESURE ABSOLUE

(30) Priorität: 30.11.2007 DE 102007058122; 01.12.2008 DE 102008059775
(43) Veröffentlichungstag der Anmeldung: 08.09.2010
(73) Patentinhaber: Continental Teves AG & Co. oHG, 60488 Frankfurt (DE)
(72) Erfinder: ACKER, Heinrich, 65824 Schwalbach (DE)
(86) Internationale Anmeldenummer: PCT/EP2008/066565
(87) Internationale Veröffentlichungsnummer: WO 2009/068695

(56) Entgegenhaltungen:
- EP-A- 1 074 818
- DE-A1-102004 004 025

## Beschreibung

Die Erfindung betrifft eine Winkelsensoranordnung gemäß Oberbegriff von Anspruch 1 sowie die Verwendung der Winkelsensoranordnung in Kraftfahrzeugen.

Druckschrift DE 10 2004 004 025 A1 schlägt einen Lenkwinkelsensor mit einem ersten und einem zweiten Zahnrad vor, auf denen jeweils ein magnetischer Encoder angeordnet ist, wobei sich das erste Zahnrad mit einer Lenkwelle dreht. Diesen Encodern ist jeweils ein Magnetfeldsensorelement zugeordnet, aus deren Ausgangssignalen der absolute Lenkwinkel bestimmt wird, indem das Nonius-Prinzip angewendet wird.

Der Erfindung liegt die Aufgabenstellung zugrunde, eine Winkelsensoranordnung vorzuschlagen, welche eine relativ hohe Präzision der Erfassung des absoluten Drehwinkels ermöglicht.

Diese Aufgabe wird erfindungsgemäß gelöst durch die Winkelsensoranordnung gemäß Anspruch 1.

Durch die erfindungsgemäße Ausbildung der Winkelsensoranordnung kann diese das Nonius-Prinzip mit gesteigerter oder optimaler Wirkung ausnutzen.

Unter einem Magnetfeldsensorelement wird bevorzugt ein magnetoelektrisches Wandlerelement, wie ein AMR-Element, ein GMR-Element, ein anderes magnetoresistives Sensorelement oder ein Hallelement, verstanden. Wenigstens eines der Magnetfeldsensorelemente, insbesondere sämtliche Magnetfeldsensorelemente, ist besonders bevorzugt als AMR-Sensorelement mit zwei Brückenstrukturen oder als doppeltes Hallelement oder als Hallelement mit integriertem Joch und Auswerteschaltung zur Messung von zwei Magnetfeldkomponenten ausgebildet. Es ist ganz besonders bevorzugt, solche Magnetfeldsensorelemente zu kombinieren bzw. kombiniert einzusetzen.

Bei Verwendung wenigstens eines AMR-Magnetfeldsensorelements korrespondiert zweckmäßigerweise ein jeweilig erfasster Pol mit einer Periode des Magnetfeldsensorelementausgangssignals und bei zumindest einem GMR-Magnetfeldsensorelement korrespondiert ein jeweilig erfasstes Polpaar mit einer Periode des Magnetfeldsensorelementausgangssignals.

Das wenigstens eine Magnetfeldsensorelement weist bevorzugt zwei Ausgänge auf, welche insbesondere ein im Wesentlichen sinus-förmiges und ein im Wesentlichen cosinus-förmiges Ausgangssignal bereitstellen, wobei diese Ausgangssignale besonders bevorzugt entsprechend im Wesentlichen um 90° gegeneinander phasenverschoben sind.

Es ist bevorzugt, dass wenigstens ein oder mehrere oder sämtliche der Magnetfeldsensorelemente eine integrierte elektronische Signalverarbeitungsschaltung aufweisen, welche insbesondere einen Drehwinkel innerhalb eines Pols/Polpaares bzw. innerhalb einer Periode des zugeordneten Encoders bestimmen bzw. den Feldwinkel des erfassten Magnetfelds ausgangsseitig bereit stellen.

Die Magnetfeldsensorelemente sind vorzugsweise direkt oder indirekt mit einer elektronischen Kontrolleinheit verbunden, welche insbesondere in die Winkelsensoranordnung integriert ist, wobei die elektronische Kontrolleinheit so ausgebildet ist, dass aus den Magnetfeldsensorelementausgangssignalen direkt oder indirekt der absolute Drehwinkel innerhalb des Drehwinkelmessbereichs ermittelt wird. Die elektronische Kontrolleinheit umfasst besonders bevorzugt einen Busknoten für zusätzliche Sensoranordnungen. Die elektronische Kontrolleinheit umfasst ganz besonders bevorzugt wenigstens einen Mikroprozessor bzw. Mikrokontroller.

Vorzugsweise ist die elektronische Kontrolleinheit mit einer zusätzlichen elektronischen Kontrolleinheit eines Kraftfahrzeugbremssystems verbunden, welche auf den ermittelten Drehwinkel der Winkelsensoranordnung zurückgreift und insbesondere zusätzliche Kontrollsysteme aufweist.

Zweckmäßigerweise umfasst die elektronische Kontrolleinheit wenigstens einen Analog-/Digitalwandler und/oder zumindest einen Sinus-Digital-Wandler, insbesondere wenn die Magnetfeldsensorelemente selber keinen integrierten Analog-/Digitalwandler umfassen.

Der erste magnetische Encoder ist bevorzugt an dem ersten Zahnrad befestigt, insbesondere konzentrisch, und der zweite magnetische Encoder zweckmäßigerweise an dem zweiten Zahnrad, insbesondere konzentrisch.

Es ist bevorzugt, dass der erste magnetische Encoder als Multipolencoder und der zweite magnetische Encoder als Dipolencoder ausgebildet sind.

Wenigstens ein Zahnrad ist bevorzugt im Wesentlichen kreisrund ausgebildet.

Die Zähne des erstens Zahnrads und des zweiten Zahnrads greifen zweckmäßigerweise ineinander.

Das erste und zweite Zahnrad bilden zweckmäßigerweise eine Getriebestufe.

Die Winkelsensoranordnung umfasst bevorzugt eine Signalverarbeitungseinheit mit wenigstens zwei Signalverarbeitungskanälen, wobei das wenigstens eine Magnetfeldsensorelement, das dem ersten Encoder zugeordnet ist, an einen ersten Signalverarbeitungskanal angeschlossen ist und das wenigstens eine Magnetfeldsensorelement, das dem zweiten Encoder zugeordnet ist, an einen zweiten Signalverarbeitungskanal angeschlossen ist, wobei die beiden Signalverarbeitungskanäle ausgangsseitig mit einem Multiplexer verbunden sind, welcher seinerseits mit einem Analog-/Digitalwandler verbunden ist, der ausgangsseitig mit einer Berechnungseinheit verbunden ist, welche jeweils einen Drehwinkel des erfassten Magnetfelds eines Pols/Polpaares/Periode des ersten und zweiten Encoders berechnet und/oder aus diesen Drehwinkeln den absoluten Drehwinkel der Welle berechnet.

Es ist zweckmäßig, dass die Signalverarbeitungseinheit wenigstens zwei Signalverarbeitungskanäle aufweist, von denen jeder zumindest einem Magnetfeldsensorelement zugeordnet ist oder wobei jedem der, beispielsweise zwei oder vier, Magnetfeldsensorelemente ein separater Signalverarbeitungskanal zugeordnet ist, wobei jeder der Signalverarbeitungskanäle eine Signalverstärkereinheit und/oder einen Analog-Digitalwandler und/oder einen Sinus-Digital-Wandler aufweist. Insbesondere sind zwei oder mehr der Signalverarbeitungskanäle ausgangsseitig mit einem Multiplexer verbunden, welcher die Signal an einen gemeinsamen Analog-/Digitalwandler oder an die elektronische Kontrolleinheit überträgt.

Die Signalverarbeitungseinheit und/oder der zumindest eine Multiplexer und/oder der wenigstens eine Analog-/Digitalwandler und/oder die Berechnungseinheit sind bevorzugt auf einem gemeinsamen Chip ausgebildet und/oder in die elektronische Kontrolleinheit integriert.

Das erste und das zweite Zahnrad sind bezüglich ihres gemeinsamen Übersetzungsverhältnisses und der erste und zweite magnetische Encoder bezüglich ihrer Pol-/Polpaar-Anzahlen vorzugsweise so ausgebildet, dass Δ ein Wert größer 0 und kleiner 0,04 zugeordnet ist.

Das erste und zweite Zahnrad sind bezüglich ihres gemeinsamen Übersetzungsverhältnisses und der erste und zweite magnetische Encoder sind bezüglich ihrer Pol- oder Polpaar-Anzahlen zweckmäßigerweise so ausgebildet, dass n ein Wert zwischen 8 und 60, und insbesondere ein Wert zwischen 14 und 40, zugeordnet ist.

Der erste magnetische Encoder ist bevorzugt ringförmig bzw. als Hohlzylinder ausgebildet, damit er nicht am Ende der Welle angeordnet bzw. montiert werden muss.

Das erste und zweite Zahnrad weisen vorzugsweise jeweils für einen gleichmäßigeren Getriebelauf eine schräge Verzahnung auf und/oder die Winkelsensoranordnung weist ein drittes Zahnrad auf, welches zu dem zweiten Zahnrad im Wesentlichen koaxial angeordnet ist und mit dem zweiten Zahnrad gemeinsam gegenüber dem ersten Zahnrad mittels einer Federverspannung verzahnt ist, wodurch das Getriebespiel zwischen den Zahnrädern vermindert oder eliminiert werden kann.

Die Magnetfeldsensorelemente sind zweckmäßigerweise bezüglich ihrer jeweiligen sensitiven Hauptebene im Wesentlichen in einer gemeinsamen Ebene angeordnet. Insbesondere sind diese Magnetfeldsensorelement in/auf einem gemeinsamen Chip integriert oder auf einer gemeinsamen Leiterplatte angeordnet, was relativ kostengünstig ist.

Die Winkelsensoranordnung weist bevorzugt ein Gehäuse auf, welches zumindest teilweise magnetisch abschirmend ausgebildet ist. Dies ist insbesondere bei relativ kompakter Ausbildung der Winkelsensoranordnung vorteilhaft bzw. nützlich. Der Drehwinkelmessbereich beträgt vorzugsweise mehr als 360° und weniger als 2160°. Dabei hängt der Drehwinkelmessbereich insbesondere vom maximalen Lenkbereich der Lenkung eines Kraftfahrzeugs ab, wobei dieser Lenkbereich besonders bevorzugt 4 bis 6 Lenkumdrehungen beträgt.

Die Winkelsensoranordnung ist vorzugsweise redundant ausgebildet, indem dem ersten und dem zweiten magnetischen Encoder jeweils mindestens zwei Magnetfeldsensorelemente zugeordnet sind, wodurch der Ausfall eines Magnetfeldsensorelements oder eines Magnetfeldsensorelements pro Encoder kompensiert werden kann und der Betrieb der Winkelsensoranordnung dennoch aufrechterhalten bleiben kann. Insbesondere weist die Winkelsensoranordnung zur weiteren Erhöhung der Eigensicherheit bzw. Betriebssicherheit wenigstens vier separate Messkanäle auf, welchen jeweils eines der Magnetfeldsensorelemente zugeordnet ist. Die elektronische Kontrolleinheit und/oder die Signalverarbeitungseinheit sind zweckmäßigerweise so ausgebildet, dass sie einen Ausfall wenigstens eines Magnetfeldsensorelements und/oder zumindest eines Messkanals erkennen und besonders bevorzugt eine diesbezügliche Warninformation bereitstellen.

Es ist bevorzugt, dass der erste und/oder zweite magnetische Encoder so ausgebildet sind, dass die Magnetisierungsrichtungen von Teilbereichen innerhalb mindestens eines der Pole entlang der Encoderspur im Wesentlichen stetig und/oder monoton verändernd und/oder kontinuierlich verlaufend ausgeprägt sind. Die jeweilige Änderung der Magnetisierungsrichtungen benachbarter Teilbereiche eines oder mehrerer Pole ist entlang der Encoderspur in dabei insbesondere im Wesentlichen linear zu einer korrespondierenden Weglängenänderung entlang der Encoderspur ausgeprägt. Hierdurch besteht bereits an der Oberfläche des Encoders ein im Wesentlichen linearer Zusammenhang zwischen Feldwinkel bzw. erfassbarem Magnetfeld und Messgröße bzw. Relativposition zwischen Encoder und einem Magnetfeldsensorelement. Aus diesem Grund kann bei Verwendung solch eines magnetischen Encoders in einer Sensoranordnung zur Feldwinkel-/ Feldrichtungserfassung der Leseabstand bzw. Luftspalt zwischen Encoder und Magnetfeldsensorelement relativ gering gehalten werden, also deutlich kleiner als eine halbe Pollänge. Außerdem wird deshalb nur eine relativ geringe Materialstärke des Encoders benötigt, was eine Kostenverringerung ermöglicht und die Störfestigkeit bzw. der Signal-Rausch-Abstand der Sensoranordnung wird durch die nun applizierbare geringe Luftspaltlänge ebenfalls verbessert.

Die Encoderspur verläuft vorzugsweise entlang einer Messrichtung bzw. eines magnetisch aufgeprägten Maßstabs des Encoders und/oder setzt sich zweckmäßigerweise aus den aufeinanderfolgenden Polen zusammen.

Der magnetische Encoder ist zweckmäßigerweise als Permanentmagnet aus hartmagnetischem Material ausgebildet.

Die Magnetisierungsrichtung bezieht sich bevorzugt auf die Verlaufsrichtung der Encoderspur, das heißt die Magnetisierungsrichtung ist insbesondere stets auf eine in dem jeweiligen Teilbereich angelegte Tangente zur Encoderspur bezogen.

Die Pole des magnetischen Encoders sind bevorzugt nicht blockartig und/oder homogen magnetisiert.

Unter einem durch ein Magnetfeldsensorelement erfassbaren Pol/Polpaar des ersten oder zweiten magnetischen Encoders wird vorzugsweise ebenfalls eine Periode verstanden.

Die Magnetisierungsrichtungen der Teilbereiche innerhalb von zwei aufeinander folgenden Pollängen entlang der Encoderspur sind bevorzugt so ausgeprägt, dass diese Magnetisierungsrichtungen im Wesentlichen eine Drehung um 360° abbilden.

Unter einem Teilbereich wird vorzugsweise ein Bereich des einen oder der mehreren bzw. sämtlicher Pole verstanden, der infinitesimal schmal, insbesondere streifenförmig, entlang der Encoderspur ausgebildet ist.

Es ist bevorzugt, dass zumindest innerhalb der Teilbereiche in einem mittleren Segment eines Pols, welches bezüglich der Pollänge entlang der Encoderspur 50% dieser Länge umfasst und von zwei Randsegmenten dieses Pols umfassend jeweils 25% der Pollänge beidseitig eingegrenzt wird, die Magnetisierungsrichtungen dieser Teilbereiche im mittleren Segment dieses Pols im Wesentlichen eine Drehung von mindestens 45°, insbesondere mindestens 70°, besonders bevorzugt von 90° ± 5°, abbilden und/oder dass die Magnetisierungsrichtungen der beiden beidseitig äußersten Teilbereiche des mittleren Segments dieses Pols um mindestens 45°, insbesondere mindestens 70°, besonders bevorzugt 90° ± 5°, zueinander bzw. gegeneinander verdreht ausgeprägt sind, wobei die Magnetisierungsrichtungen stets auf die jeweilige Verlaufsrichtung der Encoderspur bezogen sind. Ganz besonders bevorzugt bilden die Magnetisierungsrichtungen dieser Teilbereiche im mittleren Segment dieses Pols eine Drehung von im Wesentlichen 90° ab.

Die Encoderspur und/oder der Encoder sind bevorzugt im Wesentlichen entsprechend einer der folgenden geometrischen Formen ausgebildet: Ring, Ringsegment, Flachzylinder, Quader, langer Quader, flacher, scheibenförmiger Quader, Zylinder, langer Zylinder oder Halbzylinder, entlang der Längsachse geteilt.

Die Erfindung betrifft außerdem die Verwendung der Winkelsensoranordnung als Lenkwinkelsensoranordnung in einem Kraftfahrzeug.

Die erfindungsgemäße Winkelsensoranordnung ist bevorzugt zur Verwendung in Systemen vorgesehen, in welchen ein absoluter Drehwinkel über einen Drehwinkelmessbereich von mehr als 360° gemessen werden soll, d.h. "multi-turn" und eine "true-power-on"-Funktionalität, d.h. auch direkt nach in Betriebnahme bzw. wieder in Betriebnahme, insbesondere bezogen auf die Energieversorgung der Winkelsensoranordnung. Dabei ist die Messung/ Messbarkeit des absoluten Drehwinkels bezogen auf den gesamten Drehwinkelmessbereich wünschenswert oder sogar zwingend erforderlich.

Weitere bevorzugte Ausführungsformen ergeben sich aus den Unteransprüchen und der nachfolgenden Beschreibung eines Ausführungsbeispiels an Hand von Figuren.

Es zeigen in schematischer Darstellung
- Fig. 1: ein Ausführungsbeispiel der Winkelsensoranordnung,
- Fig. 2: eine beispielhafte Signalverarbeitung der Winkel- sensoranordnung
- Fig. 3: die durch die Magnetfeldsensorelemente erfassten Pole/Polpaare bezogen auf den Drehwinkelmessbe- reich der Winkelsensoranordnung,
- Fig. 4: einen beispielhaften, ringförmigen, magnetischen Encoder gemäß dem Stand der Technik,
- Fig. 5: ein Ausführungsbeispiel eines ringförmigen Encoders mit entlang der Encoderspur kontinuierlich drehen- den Magnetisierungsrichtungen,
- Fig. 6: eine beispielhafte graphische Darstellung der Mag- netisierungsrichtung in Abhängigkeit der normier- ten Weglänge entlang der Encoderspur bezogen auf einen Encoder mit blockartiger Magnetisierung und auf einen Encoder mit entlang der Encoderspur kon- tinuierlich drehenden Magnetisierungsrichtungen, und
- Fig. 7: eine beispielhafte Magnetisierungsvorrichtung.

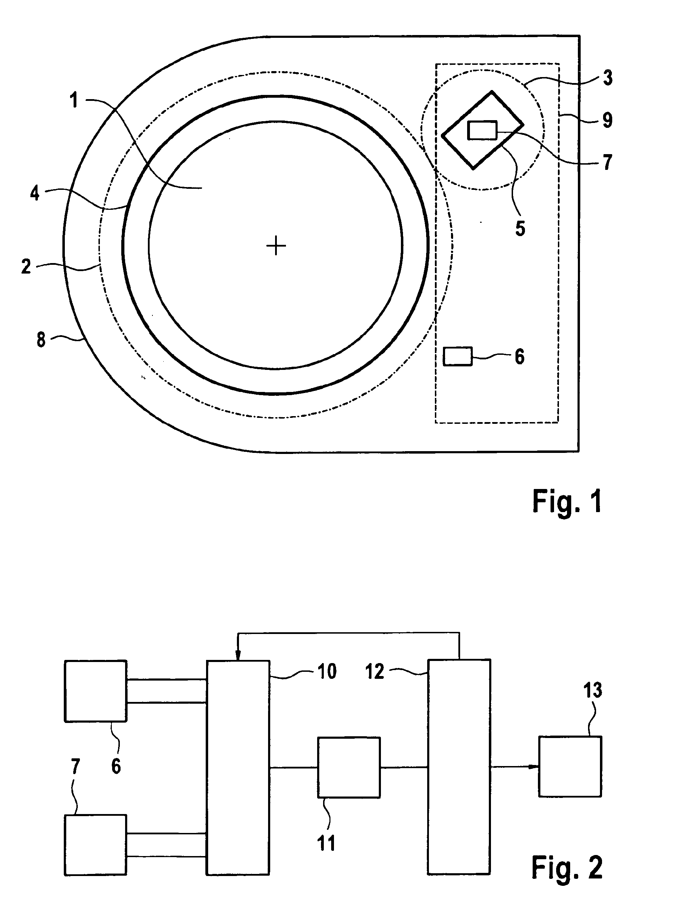

In der in Fig. 1 anhand eines Querschnitts beispielhaft dargestellten Winkelsensoranordnung ist Welle 1 bzw. Lenkwelle 1 konzentrisch von erstem Encoder 4 umgeben, wobei Konstruktionselemente vorgesehen sein können, die beide Teile in einen Abstand zueinander halten. Welle 1 und erster Encoder 4 sind drehfest aneinander befestigt, z.B. durch Formschluss über eine nicht dargestellte Abwandlung der Kreisform des Querschnitts. Ebenfalls drehfest an Welle 1 befestigt ist das erste Zahnrad 2. Erster magnetischer Encoder 4, beispielhaft als Multipolencoder ausgebildet und erstes Zahnrad 2 können als integriertes Bauteil ausgebildet sein. Gehäuse 8 bildet die Außenkonturen der Lenkwinkelsensoranordnung und umschließt Leiterplatte 9, auf welcher Magnetfeldsensorelemente 6 und 7 angeordnet sind. Dabei ist Magnetfeldsensorelement 6 dem ersten magnetischen Encoder 4 zugeordnet, und dessen Magnetfeld bzw. die Feldrichtung werden im Wesentlichen im Bereich eines seiner Pole/Polpaare/Perioden erfasst; Magnetfeldsensorelement 7 ist entsprechend dem zweitem magnetischen Encoder 5 zugeordnet, welcher beispielhaft als Dipolencoder ausgebildet ist. Zweiter magnetischer Encoder 5 ist drehfest mit zweitem Zahnrad 3 verbunden, beispielsweise indem zweiter Encoder 5 in einen nicht dargestellten Hohlraum in zweitem Zahnrad 3 angeordnet und befestigt ist. Zweiter magnetischer Encoder 5 und zweites Zahnrad 3 können alternativ als integriertes, gemeinsames Bauteil ausgebildet sein. Erstes und zweite Zahnrad 2, 3 greifen ineinander und bilden eine Getriebestufe. Die Winkelsensoranordnung nutzt beispielgemäß das Nonius-Prinzip, wobei aus der durch die Magnetfeldsensorelemente 6 ,7 erfassten Feldrichtung bezüglich der Pole/Polpaare des jeweils zugeordneten Encoders 4 ,5 jeweils ein Drehwinkel pro Encoder 4, 5 ermittelt wird. Dabei sind die jeweils auftretenden Kombinationen an ermittelbaren Drehwinkeln über den gesamten Drehwinkelmessbereich einzigartig, wonach aus jeder Drehwinkelkombination der absolute Drehwinkel der Welle 1 bezogen auf den gesamten Drehwinkelmessbereich ermittelt wird. Die Anzahl an erfassbaren Pole pro Encoder ergibt sich aus dem Übersetzungsverhältnis der Zahnräder 2, 3 sowie der Anzahl der Pole des ersten und zweiten Encoders 4, 5. Beispielgemäß sind das erste und zweite Zahnrad 2, 3 bezüglich ihres gemeinsamen Übersetzungsverhältnisses und der erste und zweite magnetische Encoder 4, 5 bezüglich ihrer Pol-Anzahlen so ausgebildet, dass das dem ersten oder dem zweiten Encoder 4, 5 zugeordnete Magnetfeldsensorelement 6, 7 bezogen auf den gesamten Drehwinkelmessbereich der Winkelsensoranordnung n Pole oder Polpaare erfasst und das dem zweiten oder dem ersten Encoder 5, 4 zugeordnete Magnetfeldsensorelement 7, 6 bezogen auf den gesamten Drehwinkelmessbereich der Winkelsensoranordnung n-1+Δ Pole oder Polpaare erfasst, wobei Δ als reelle Zahl zwischen 0 und 1 definiert ist und n als natürliche Zahl definiert ist. Durch diese Kombination wird das Nonius-Prinzip besonders effektiv genutzt, wodurch eine besonders hohe Messgenauigkeit ermöglicht wird.

Fig. 2 zeigt eine beispielhafte Signalverarbeitung der Winkelsensoranordnung. Die Ausgangssignale der Magnetfeldsensorelemente 6, 7 werden dabei ausgewertet, indem sie zu einem Multiplexer 10 geführt werden, der, gesteuert durch die Berechnungseinheit 12, jeweils eines der Magnetfeldsensorelementausgangssignale zum Analog-/Digitalwandler 11 mit integrierter, Signalverstärkereinheit überträgt. Analog-/Digitalwandler 11 überträgt dabei sein jeweiliges, digitalisiertes Ausgangssignal an Berechnungseinheit 12. Da beispielhaft vier Signale vorhanden sind, zwei Magnetfeldsensorelemente mit einer Brückenstruktur, die jeweils zwei Ausgangssignale erzeugt, wobei eines dieser Signale im Wesentlichen sinusförmig und das andere cosinusförmig ausgebildet ist, müssen vier Signalkanäle dem Multiplexer 10 zugeführt werden, die nacheinander von Berechnungseinheit 12 ausgewählt werden. Berechnungseinheit 12 erhält so die notwendigen Informationen, um anschließend den absoluten Drehwinkel zu berechnen und auszugeben, beispielgemäß wird der absolute Drehwinkel an eine elektronische Kontrolleinheit 13 übertragen bzw. dieser zur Verfügung gestellt. Dieser Vorgang wird zyklisch wiederholt.

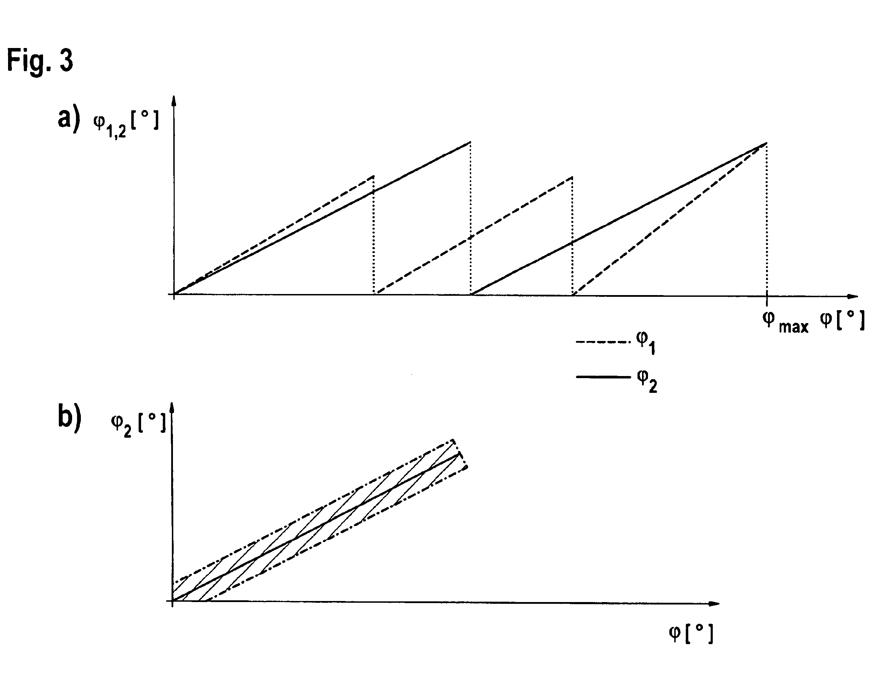

Anhand der Fig. 3 ist eine beispielgemäße Auslegung der Winkelsensoranordnung veranschaulicht, mit welcher das Nonius-Prinzip effektiv bzw. optimal ausgeschöpft werden kann. Fig. 3 a) zeigt den von einem ersten Magnetfeldsensorelement erfassten Winkel ϕ₁, gestrichelte Kurve, des ersten Encoders und den von einem zweiten Magnetfeldsensorelement erfassten Winkel ϕ₂, durchgezogene Kurve, des zweiten Encoders, jeweils innerhalb des Bereichs von zwei bzw. drei Polpaaren bzw. Perioden und in Abhängigkeit des Drehwinkels ϕ der Welle, insgesamt bezogen auf den definierten Drehwinkelmessbereich der Winkelsensoranordnung von 0° bis zu einem maximalen Winkel ϕₘₐₓ. Bezüglich des Drehwinkelmessbereichs erfasst das erste Magnetfeldsensorelement 3 Perioden und das zweite Magnetfeldsensorelement 2 Perioden.

Wie in aus Fig. 3 b) erkennbar ist außerdem einerseits für eine genaue Messung eine möglichst hohe Steigung der Kennlinie, Beispiel für ϕ₂, durchgezogene Kurve, anzustreben, da durch Messungenauigkeiten und Störungen der erfassten Winkel, hier ϕ₂ innerhalb eines Fehlerbandes liegt. Das Fehlerband ist durch Schraffur gekennzeichnet und wird durch zwei strich-gepunkteten Maximalfehlerwinkelkurven begrenzt. Je höher die Steigung der Kurve, desto geringer macht sich das Fehlerband bemerkbar, wodurch der Signal-/Rauschabstand erhöht wird. Eine steilere Kurve bedeutet möglichst viele durch das jeweilige Magnetfeldsensorelement erfassbare Perioden innerhalb des Drehwinkelmessbereichs. Andererseits kann die Anzahl der Perioden jedoch nicht beliebig gesteigert werden, u. a. weil die Pollängen nur begrenzt verringert werden können und der Außenumfang der Encoderspur aus Gründen der gewünschten Kompaktheit der Winkelsensoranordnung nur begrenzt erhöht werden kann. Zusätzlich wirken sich die Fertigungsfehler bzw. -toleranzen bezüglich der Pollängen der magnetischen Encoder bei geringeren Pollängen wiederum stärker aus als bei großen Pollängen.

Bei einer Auslegung mit n zu n-1 erfassbaren Polen/Polpaaren bzw. Perioden wird die maximale Steilheit beider Kurven innerhalb einer einzelnen Winkelsensoranordnung bezogen auf den Messbereich erreicht, unabhängig von der jeweiligen Pollänge.

Demzufolge sollten außerdem beide Teilsysteme zweckmäßigerweise eine Pol- bzw. Periodenzahl aufweisen, die sich möglichst nahe am konstruktiven Maximum bewegt. Dies unterscheidet sich wesentlich von der Auslegung bisher bekannter Winkelsensoranordnungen, in denen - teilweise unter Nutzung der sog. Diophantischen Gleichungen - lediglich das Kriterium der Eindeutigkeit angelegt wurde. Die Kombination von n-1 Perioden und n Perioden bedeutet, dem konstruktiven Maximum (n) in beiden Teilsystemen möglichst nahe zu kommen. Es stellt sich eine Phasenverschiebung zwischen den Teilsystemen ein, aufgrund derer die Abbildung auf den Drehwinkel im gesamten Messbereich eindeutig ist. Dieser Messbereich wird durch das Kriterium n-1 bzw. n begrenzt, weil die Phasenverschiebung am Messbereichsanfang nach n-1 bzw. n Perioden am Messbereichsende genau wieder erreicht wird. Deshalb ist es insbesondere nicht optimal, beispielsweise n und n-0,4 Perioden bzw. erfassbare Pole/Polpaare zu wählen, denn dann wird weniger als die Hälfte des möglichen Messbereichs genutzt.

Die Winkelsensoranordnung soll bevorzugt einen möglichst geringen Bauraum einnehmen, daraus ergibt sich, dass eine Getriebestufe bezogen auf das Übersetzungsverhältnis Ü des ersten und zweiten Zahnrades mit Ü = n/(n-1) nicht optimal erscheint. Der minimale Durchmesser des ersten Zahnrades auf der Welle ist durch den Wellenumfang selbst gegeben, der oft bereits einen für die angestrebten Abmessungen einer Winkelsensoranordnung großen Durchmesser aufweist. Da der Wert von n beispielsweise bei 30 oder 40 liegen kann, würde die Getriebestufe ein Übersetzungsverhältnis nahe eins aufweisen, was mechanisch problematisch ist. Eine zweite Getriebestufe soll insbesondere nicht zur Lösung des Problems eingesetzt werden, weil dadurch das Problem der Getriebetoleranzen verschärft werden könnte. Es ist daher besonders bevorzugt, ein kombiniertes magnetisch-mechanisches Übersetzungsverhältnis Ü_{MM} einzuführen. Wenn die Anzahl der durch das jeweilig zugeordnete Magnetfeldsensorelement erfassbaren Pole/Polpaare/Perioden n bzw. n-1 Pole entspricht, die Encoder selbst aber P₁ und P₂ Pole aufweisen so ist Ü_{MM} = (P₁ / P₂) * ((n-1) / n). Ü_{MM} ist der Faktor, um den das zweite Zahnrad bezogen auf die Verzahnung kleiner ist als das erste Zahnrad, daher sollte P₁ / P₂ ganz besonders bevorzugt so gewählt werden, dass das zweite Zahnrad eine Zähnezahl erhält, die in der Nähe des Minimums für eine hohe Laufgüte des Getriebes liegt. Zahlenbeispiel:
n = 36, P₁ = 6, P₂ = 2
Ü_{MM} = 2,91667
mögliche Zahnzahlenkombination Ü_{MM} = 70 / 24

Das zweite Zahnrad kann somit vorzugsweise relativ klein und platzsparend ausfallen, obwohl die durch die zugeordneten Magnetfeldsensorelemente bezogen auf den Drehwinkelmessbereich erfassbaren Periodenzahlen/Pole/Polpaare des ersten und zweiten Encoders sich nur um eins unterscheiden. Es ist daher besonders vorteilhaft, das kleinere, zweite Zahnrad mit einem einfachen Magneten auszustatten (P₂ = 2), der überdies deutlich billiger herzustellen ist als ein Multipolencoder. Das erste Zahnrad sollte dagegen vorteilhafterweise mit einem ringförmigen Multipolencoder als erstem Encoder gekoppelt sein, damit die Winkelsensoranordnung nicht nur an einem Wellenende, sondern mit einer durchsteckbaren Welle eingesetzt werden kann. Dazu ist eine Ringstruktur des ersten Encoders unvermeidbar. Der Ring könnte prinzipiell allerdings auch nur zwei Pole aufweisen.

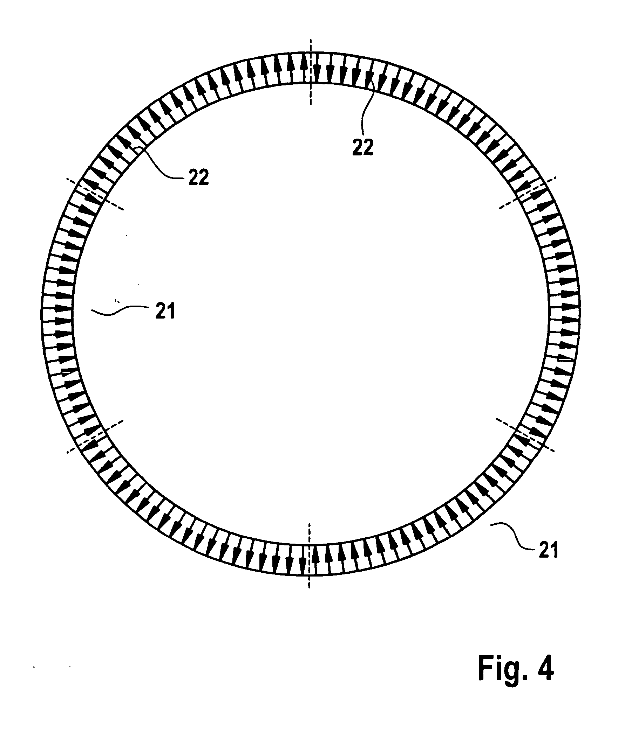

Fig. 4 zeigt einen ringförmigen Encoder mit sechs Polen, welcher in herkömmlicher Weise ausgebildet ist. Die Magnetisierungsrichtungen 22 einzelner Teilbereiche der Pole 21 sind durch Pfeile dargestellt. Die Pole 21 sind homogen bzw. blockartig magnetisiert. Die Encoder weisen also eine alternierende Nord- Süd- Magnetisierung auf. Die Aneinanderreihung der Pole bildet beispielgemäß die Encoderspur aus.

Ein nicht dargestelltes Magnetfeldsensorelement erfasst im Nahbereich bzw. bei relativ kleinem Luftspalt die blockartigen bzw. kastenprofilartigen Magnetisierungen der Pole über deren homogenes Magnetfeld. Nur bei einem relativ großen Luftspalt kann das Magnetfeldsensorelement eine Winkelmessung durchführen, bei welcher sich der erfasste Winkel des Magnetfeldes entlang der Encoderspur einigermaßen gleichmäßig dreht, da sich bei relativ großem Abstand zur Encoderspur die Magnetfelder der benachbarten und umliegenden Pole überlagern. Hierzu ist jedoch ein relativ starkes Magnetfeld des Encoders erforderlich.

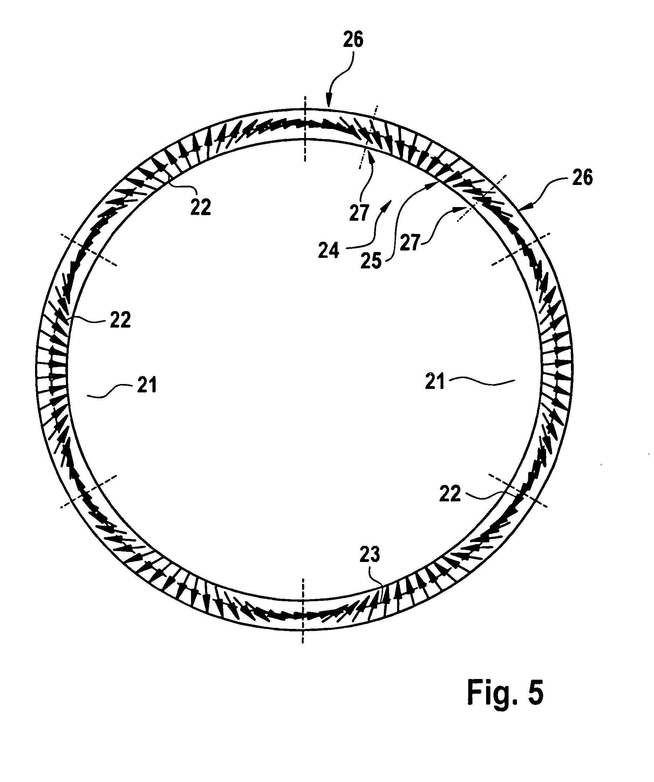

In Fig. 5 ist ein beispielhafter, ringförmiger Encoder mit entlang der Encoderspur kontinuierlich drehenden Magnetisierungsrichtungen 22, welche vereinzelt bzw. exemplarisch als Pfeile veranschaulicht sind, dargestellt. Die Encoderspur verläuft dabei beispielhaft entlang der gestrichelten Mittellinie 23 des Rings bzw. wird durch die Aneinanderreihung der Pole 21 gebildet. Die Magnetisierung des Encoders und der Pole 21 ist derart ausgebildet, dass die jeweiligen Änderungen der Magnetisierungsrichtungen 22 benachbarter Teilbereiche der Pole 21 entlang der Encoderspur linear und kontinuierlich zur Weglänge entlang der Encoderspur bzw. zur Weglänge entlang der gestrichelten Mittellinie 23 verlaufend ausgeprägt sind. Deshalb kann ein nicht dargestelltes Magnetfeldsensorelement auch bei relativ geringem Luftspalt und unabhängig von der Luftspaltlänge ein gleichmäßig drehend ausgeprägtes Magnetfeld entlang der Encoderspur erfassen, wodurch eine radiale Winkelmessung im Wesentlichen unabhängig von der Luftspaltlänge möglich ist.

Anhand des Pols 24 wird beispielhaft die Magnetisierung der Pole 21 detaillierter erläutert. Pol 24 kann in ein mittleres Segment 25 mit 50% der Pollänge und zwei dieses mittlere Segment 25 eingrenzende Randsegmente 26 mit jeweils 25% der Pollänge unterteilt werden. Innerhalb dieses mittleren Segments 25 bilden die Magnetisierungsrichtungen 22 der Teilbereiche eine Drehung von im Wesentlichen 90° ab, was bei einem realen Encoder durch Fertigungsungenauigkeiten beispielsweise als Drehung von 90° ± 5° realisiert ist. Anders ausgedrückt sind die Magnetisierungsrichtungen 22 der beiden beidseitig äußersten Teilbereiche 27 des mittleren Segments 25 dieses Pols 24 gegeneinander um im Wesentlichen 90° bzw. 90° ± 5° verdreht ausgeprägt.

Die Teilbereiche sind beispielhaft eigentlich infinitesimal schmal entlang der Encoderspur ausgebildet, was allerdings nicht konkret darstellbar ist.

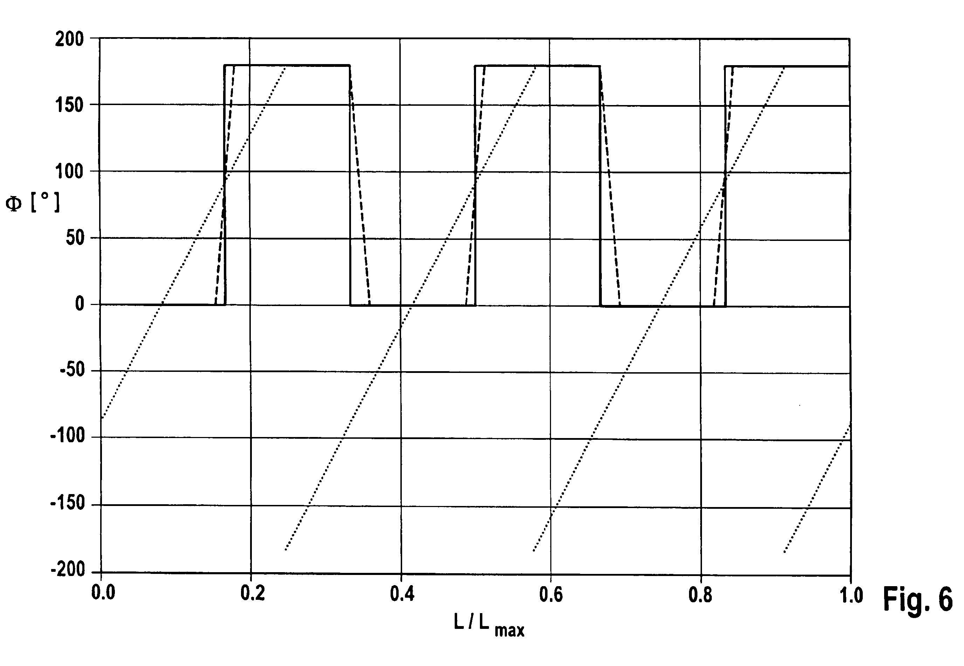

In Fig. 6 ist zur Verdeutlichung die Feldrichtung Φ in Grad über die normierte Encoderspurlänge L/Lₘₐₓ, d.h. die Messgröße bzw. der von einem Magnetfeldsensorelement erfasste Feldlinienverlauf entlang der Encoderspur einer nicht dargestellten Sensoranordnung aufgetragen. Die durchgezogene Kurve repräsentiert dabei einen blockartig magnetisierten Encoder nach dem Stand der Technik, direkt an der Oberfläche gemessen, mit der Idealisierung von blockartigen Polen gemäß Fig. 4. Die gestrichelte Kurve stellt den gleichen Encoder in gleichem Abstand dar, aber unter Berücksichtigung einer in der Realität immer vorhandenen Übergangszone zwischen den Polen. Die gepunktete Kurve stellt den Feldrichtungsverlauf eines beispielhaften, Encoders mit entlang der Encoderspur kontinuierlich drehenden Magnetisierungsrichtungen gemäß Fig. 5 bezüglich eines relativ frei wählbaren Luftspalts dar. Diese gepunktete Kurve stellt ebenfalls den von einem Magnetfeldsensorelement erfassbaren Feldlinienverlauf eines herkömmlichen, blockartig magnetisierten Encoders in einer Idealisierung und bei einem relativ großen Luftspalt dar.

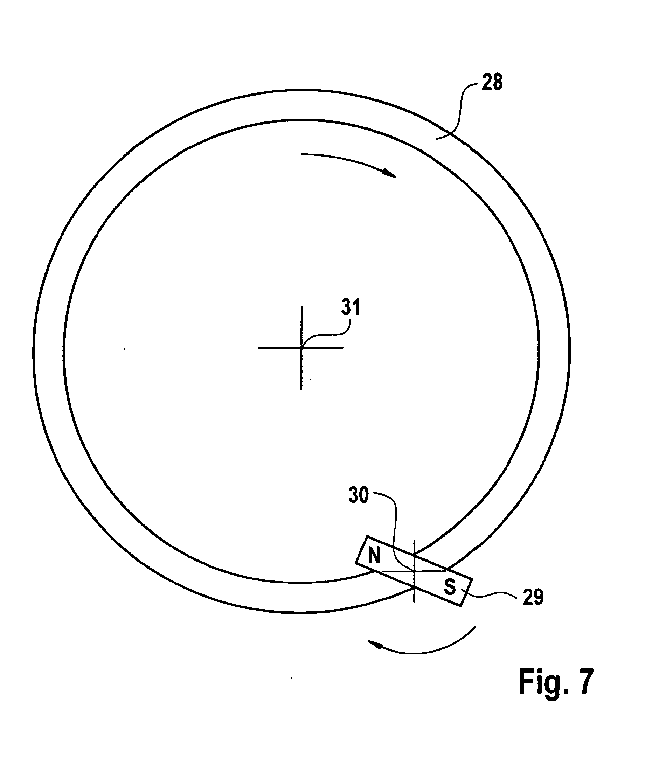

In Fig. 7 ist eine beispielhafte Magnetisierungsvorrichtung zur Herstellung eines magnetischen Encoders mit entlang der Encoderspur kontinuierlich drehenden Magnetisierungsrichtungen dargestellt. Rohencoder 28 bzw. der unmagnetisierte Encoder ist um sein Zentrum 31 so gelagert, dass er in Richtung des zugehörigen Pfeils rotatorisch bewegbar ist. Felderzeugungsmittel 29, beispielgemäß als stabförmiger Permanentmagnet ausgebildet, ist bezüglich der Achse 30 drehbar gelagert.

Zur Magnetisierung werden beide Bewegungen koordiniert zueinander ausgeführt, damit jeder Bereich des Rohencoders 28 bei dessen Drehung um 31 einen Punkt unter Felderzeugsmittel 29 zu einem Zeitpunkt erreicht, zu dem Felderzeugungsmittel 29 sich in der passenden Winkelstellung befindet. Nach einer vollständigen Umdrehung des Encoders ist dessen Magnetisierung, beispielgemäß nach Fig. 5, abgeschlossen. Dazu führt Felderzeugsmittel 29 während der einen 360°-Umdrehung des Encoders genau drei Umdrehungen aus. Mittels dieses Verfahrens lassen sich leicht verschiedene Encoder unterschiedlicher Polzahlen mit dem gleichen Aufbau realisieren. Nur das Übersetzungsverhältnis bzw. die relative Winkelgeschwindigkeit der Antriebe müssen geändert werden, was z.B. mit Schrittmotoren leicht zu erzielen ist.

## Patentansprüche

1. Winkelsensoranordnung zur Messung des Drehwinkels einer Welle (1) mit einem definierten Drehwinkelmessbereich von mehr als 360°, umfassend ein erstes Zahnrad (2) und einen ersten magnetischen Encoder (4) mit wenigstens einer Encoderspur, umfassend ein oder mehrere Polpaare, wobei sich das erste Zahnrad (2) und der erste magnetische Encoder (4) mit der Welle (1) drehen, und ein zweites Zahnrad (3) und einen zweiten magnetischen Encoder (5) mit wenigstens einer Encoderspur, umfassend ein oder mehrere Polpaare, wobei sich der zweite Encoder (5) mit dem zweiten Zahnrad (3) dreht und das erste und das zweite Zahnrad (2, 3) zusammenwirken und wobei dem ersten Encoder (4) und dem zweiten Encoder (5) jeweils zumindest ein Magnetfeldsensorelement (6, 7) zugeordnet sind, **dadurch gekennzeichnet, dass**
das erste und zweite Zahnrad (2, 3) bezüglich ihres gemeinsamen Übersetzungsverhältnisses und der erste und zweite magnetische Encoder (4, 5) bezüglich ihrer Pol-Anzahlen so ausgebildet sind, dass das dem ersten oder dem zweiten Encoder (4, 5) zugeordnete Magnetfeldsensorelement (6, 7) bezogen auf den gesamten Drehwinkelmessbereich der Winkelsensoranordnung n Pole oder Polpaare erfasst und das dem zweiten oder dem ersten Encoder (5, 4) zugeordnete Magnetfeldsensorelement (7, 6) bezogen auf den gesamten Drehwinkelmessbereich der Winkelsensoranordnung n-1+Δ Pole oder Polpaare erfasst, wobei Δ als reelle Zahl mit einem Wert größer 0 und kleiner 0,5 definiert ist und n als natürliche Zahl definiert ist.

2. Winkelsensoranordnung nach Anspruch 1, **dadurch gekennzeichnet, dass** die Magnetfeldsensorelemente (6, 7) direkt oder indirekt mit einer elektronischen Kontrolleinheit (12) verbunden sind, welche so ausgebildet ist, dass aus den Magnetfeldsensorelementausgangssignalen direkt oder indirekt der absolute Drehwinkel (ϕ) innerhalb des Drehwinkelmessbereichs ermittelt wird.

3. Winkelsensoranordnung nach Anspruch 1 oder 2, **dadurch gekennzeichnet, dass** der erste magnetische Encoder (4) an dem ersten Zahnrad (2) befestigt ist, insbesondere konzentrisch, und dass der zweite magnetische Encoder (5) an dem zweiten Zahnrad (3) befestigt ist, insbesondere konzentrisch.

4. Winkelsensoranordnung nach mindestens einem der Ansprüche 1 bis 3, **dadurch gekennzeichnet, dass** der erste magnetische Encoder (4) als Multipolencoder und der zweite magnetische Encoder (5) als Dipolencoder ausgebildet ist.

5. Winkelsensoranordnung nach mindestens einem der Ansprüche 1 bis 4, **dadurch gekennzeichnet, dass** diese eine Signalverarbeitungseinheit mit wenigstens zwei Signalverarbeitungskanäle umfasst, wobei das wenigstens eine Magnetfeldsensorelement (6), das dem ersten Encoder (4) zugeordnet ist, an einen ersten Signalverarbeitungskanal angeschlossen ist und das wenigstens eine Magnetfeldsensorelement (7), das dem zweiten Encoder (5) zugeordnet ist, an einen zweiten Signalverarbeitungskanal angeschlossen ist, wobei die beiden Signalverarbeitungskanäle ausgangsseitig mit einem Multiplexer (10) angeschlossen sind, welcher mit einem Analog-/Digitalwandler (11) verbunden ist, der ausgangsseitig mit einer Berechnungseinheit (12) verbunden ist, welche jeweils einen Drehwinkel (ϕ₁,ϕ₂) des ersten und zweiten Encoders (4, 5) berechnet und/oder aus dem Drehwinkel (ϕ₁,ϕ₂) des ersten und zweiten Encoder den absoluten Drehwinkel (ϕ) der Welle (1) berechnet.

6. Winkelsensoranordnung nach mindestens einem der Ansprüche 1 bis 5, **dadurch gekennzeichnet, dass** das erste und zweite Zahnrad (2, 3) bezüglich ihres gemeinsamen Übersetzungsverhältnisses und der erste und zweite magnetische Encoder (4, 5) bezüglich ihrer Pol-/Polpaar-Anzahlen so ausgebildet sind, dass Δ ein Wert größer 0 und kleiner 0,04 zugeordnet ist.

7. Winkelsensoranordnung nach mindestens einem der Ansprüche 1 bis 6, **dadurch gekennzeichnet, dass** das erste und zweite Zahnrad (2, 3) bezüglich ihres gemeinsamen Übersetzungsverhältnisses und der erste und zweite magnetische Encoder (4, 5) bezüglich ihrer Pol-/Polpaar-Anzahlen so ausgebildet sind, dass n ein Wert zwischen 8 und 60 zugeordnet ist.

8. Winkelsensoranordnung nach mindestens einem der Ansprüche 1 bis 7, **dadurch gekennzeichnet, dass** der erste Encoder (4) ringförmig ausgebildet ist.

9. Winkelsensoranordnung nach mindestens einem der Ansprüche 1 bis 8, **dadurch gekennzeichnet, dass** das erste und zweite Zahnrad (2, 3) jeweils eine schräge Verzahnung aufweisen und/oder dass die Winkelsensoranordnung ein drittes Zahnrad aufweist, welches zu den zweiten Zahnrad (3) koaxial angeordnet ist und mit dem zweiten Zahnrad (3) gemeinsam gegenüber dem ersten Zahnrad (2) mittels einer Federverspannung verzahnt ist.

10. Winkelsensoranordnung nach mindestens einem der Ansprüche 1 bis 9, **dadurch gekennzeichnet, dass** die Magnetfeldsensorelemente (6, 7) bezüglich ihrer jeweiligen sensitiven Hauptebene im Wesentlichen in einer gemeinsamen Ebene angeordnet sind.

11. Winkelsensoranordnung nach mindestens einem der Ansprüche 1 bis 10, **dadurch gekennzeichnet, dass** diese ein Gehäuse (8) aufweist, welches zumindest teilweise magnetisch abschirmend ausgebildet ist.

12. Winkelsensoranordnung nach mindestens einem der Ansprüche 1 bis 11, **dadurch gekennzeichnet, dass** der erste und/oder zweite magnetische Encoder (4, 5) so ausgebildet sind, dass die Magnetisierungsrichtungen (22) von Teilbereichen innerhalb mindestens eines der Pole (21,24) entlang der Encoderspur (21, 23) im Wesentlichen stetig und/oder monoton verändernd und/oder kontinuierlich verlaufend ausgeprägt sind.

13. Winkelsensoranordnung nach Anspruch 12, **dadurch gekennzeichnet, dass** die jeweilige Änderung der Magnetisierungsrichtungen (22) benachbarter Teilbereiche eines oder mehrerer Pole (21, 24) entlang der Encoderspur (21, 23) im Wesentlichen linear zu einer korrespondierenden Weglängenänderung entlang der Encoderspur (21, 23) ausgeprägt ist.

14. Winkelsensoranordnung nach Anspruch 12 oder 13, **dadurch gekennzeichnet, dass** zumindest innerhalb der Teilbereiche in einem mittleren Segment (25) eines Pols (24), welches bezüglich der Pollänge entlang der Encoderspur (21, 23) 50% dieser Länge umfasst und von zwei Randsegmenten (26) dieses Pols (24) umfassend jeweils 25% der Pollänge beidseitig eingegrenzt wird, die Magnetisierungsrichtungen (22) dieser Teilbereiche im mittleren Segment (25) dieses Pols im Wesentlichen eine Drehung von mindestens 45°, insbesondere mindestens 70°, abbilden und/oder dass die Magnetisierungsrichtungen (22) der beiden beidseitig äußersten Teilbereiche (27) des mittleren Segments (25) dieses Pols um mindestens 45°, insbesondere mindestens 70°, zueinander bzw. gegeneinander verdreht ausgeprägt sind, wobei die Magnetisierungsrichtungen stets auf die jeweilige Verlaufsrichtung der Encoderspur bezogen sind.

15. Verwendung der Winkelsensoranordnung nach mindestens einem der Ansprüche 1 bis 14 als Lenkwinkelsensoranordnung in einem Kraftfahrzeug.

## Claims

1. Angle sensor arrangement for measuring the rotational angle of a shaft (1) having a defined rotational angle measuring range of more than 360°, comprising a first gearwheel (2) and a first magnetic encoder (4) with at least one encoder track, comprising one or more pole pairs, wherein the first gearwheel (2) and the first magnetic encoder (4) rotate with the shaft (1), and a second gearwheel (3) and a second magnetic encoder (5) with at least one encoder track, comprising one or more pole pairs, wherein the second encoder (5) rotates with the second gearwheel (3), and the first and second gearwheels (2, 3) interact, and wherein at least one magnetic field sensor element (6, 7) is assigned to the first encoder (4) and to the second encoder (5), respectively, **characterized in that**
the first and second gearwheels (2, 3) are embodied in terms of their common transmission ratio and the first and second magnetic encoders (4, 5) are embodied in terms of their pole numbers in such a way that the magnetic field sensor element (6, 7) which is assigned to the first or second encoder (4, 5) detects n poles or pole pairs over the entire rotational angle measuring range of the angle sensor arrangement, and the magnetic field sensor element (7, 6) which is assigned to the second or first encoder (5, 4) detects n-1+Δ poles or pole pairs over the entire rotational angle measuring range of the angle sensor arrangement, where Δ is defined as a real number having a value greater than 0 and less than 0.5, and n is defined as a natural number.

2. Angle sensor arrangement according to Claim 1, **characterized in that** the magnetic field sensor elements (6, 7) are connected directly or indirectly to an electronic control unit (12) which is embodied in such a way that the absolute rotational angle (ϕ) within the rotational angle measuring range is determined directly or indirectly from the magnetic field sensor element output signals.

3. Angle sensor arrangement according to Claim 1 or 2, **characterized in that** the first magnetic encoder (4) is attached to the first gearwheel (2), in particular concentrically, and **in that** the second magnetic encoder (5) is attached, in particular concentrically, to the second gearwheel (3).

4. Angle sensor arrangement according to at least one of Claims 1 to 3, **characterized in that** the first magnetic encoder (4) is embodied as a multipole encoder, and the second magnetic encoder (5) is embodied as a dipole encoder.

5. Angle sensor arrangement according to at least one of Claims 1 to 4, **characterized in that** the latter comprises a signal processing unit with at least two signal processing channels, wherein the at least one magnetic field sensor element (6), which is assigned to the first encoder (4), is connected to a first signal processing channel, and the at least one magnetic field sensor element (7), which is assigned to the second encoder (5), is connected to a second signal processing channel, wherein the two signal processing channels are connected on the output side to a multiplexer (10) which is connected to an analogue/digital converter (11) which is connected on the output side to a calculation unit (12) which calculates in each case a rotational angle ((ϕ_{1,} ϕ₂) of the first and second encoders (4, 5) and/or calculates the absolute rotational angle (ϕ) of the shaft (1) from the rotational angle (ϕ₁, ϕ₂) of the first and second encoders.

6. Angle sensor arrangement according to at least one of Claims 1 to 5, **characterized in that** the first and second gearwheels (2, 3) are embodied in terms of their common transmission ratio, and the first and second magnetic encoders (4, 5) are embodied in terms of their pole numbers/pole pair numbers, in such a way that Δ is assigned a value greater than 0 and less than 0.04.

7. Angle sensor arrangement according to at least one of Claims 1 to 6, **characterized in that** the first and second gearwheels (2, 3) are embodied in terms of their common transmission ratio, and the first and second magnetic encoders (4, 5) are embodied in terms of their pole numbers/pole pair numbers, in such a way that n is assigned a value between 8 and 60.

8. Angle sensor arrangement according to at least one of Claims 1 to 7, **characterized in that** the first encoder (4) is of annular design.

9. Angle sensor arrangement according to at least one of Claims 1 to 8, **characterized in that** the first and second gearwheels (2, 3) each have an oblique toothing, and/or **in that** the angle sensor arrangement has a third gearwheel which is arranged coaxially with respect to the second gearwheel (3) and, together with the second gearwheel (3), is meshed with the first gearwheel (2) by means of a spring bias.

10. Angle sensor arrangement according to at least one of Claims 1 to 9, **characterized in that** the magnetic field sensor elements (6, 7) are arranged essentially in a common plane in terms of their respective sensitive main plane.

11. Angle sensor arrangement according to at least one of Claims 1 to 10, **characterized in that** said angle sensor arrangement has a housing (8) which is of an at least partially magnetically screening design.

12. Angle sensor arrangement according to at least one of Claims 1 to 11, **characterized in that** the first and/or second magnetic encoders (4, 5) are embodied in such a way that the magnetization directions (22) of areas within at least one of the poles (21, 24) change essentially continuously and/or monotonously and/or in a continuously progressive fashion along the encoder track (21, 23).

13. Angle sensor arrangement according to Claim 12, **characterized in that** the respective change in the magnetization directions (22) of adjacent areas of one or more poles (21, 24) along the encoder track (21, 23) is embodied essentially linearly with respect to a corresponding change in travel length along the encoder track (21, 23).

14. Angle sensor arrangement according to Claim 12 or 13, **characterized in that**, at least within the areas in a central segment (25) of a pole (24) which comprises 50% of the pole length along the encoder track (21, 23) and is bounded by two edge segments (26) of this pole (24) comprising in each case 25% of the pole length on both sides, the magnetization directions (22) of these areas in the central segment (25) of this pole essentially model a rotation of at least 45°, in particular at least 70°, and/or **in that** the magnetization directions (22) of the two outermost areas (27) on both sides of the central segment (25) of this pole are embodied rotated through at least 45°, in particular at least 70°, with respect to one another, wherein the magnetization directions are always related to the respective profile direction of the encoder track.

15. Use of the angle sensor arrangement according to at least one of Claims 1 to 14 as a steering angle sensor arrangement in a motor vehicle.

## Revendications

1. Ensemble de détection d'angles qui mesure l'angle de rotation d'un arbre (1) dans une plage définie de mesure d'angles de rotation, supérieure à 360°, et qui comprend
une première roue dentée (2) et un premier encodeur magnétique (4) qui présente au moins une trace d'encodeur et qui comprend une ou plusieurs paires de pôles, la première roue dentée (2) et le premier encodeur magnétique (4) tournant avec l'arbre (1) et
une deuxième roue dentée (3) et un deuxième encodeur mécanique (5) qui présente au moins une trace d'encodeur et qui comprend une ou plusieurs paires de pôles, le deuxième encodeur (5) tournant avec la deuxième roue dentée (3),
la première roue dentée et la deuxième roue dentée (2, 3) coopérant l'une avec l'autre et au moins un élément (6, 7) de détection de champ magnétique étant associé respectivement au premier encodeur (4) et au deuxième encodeur (5),
**caractérisé en ce que**
le rapport de conversion commun de la première et de la deuxième roue dentée (2, 3) et le nombre de pôles du premier et du deuxième encodeur magnétique (4, 5) sont configurés de telle sorte que les éléments (6, 7) de détection de champ magnétique associés respectivement au premier ou au deuxième encodeur (4, 5) saisissent n pôles ou paires de pôles sur toute la plage de mesure d'angles de rotation de l'ensemble de détection d'angles et les éléments (6, 7) de détection de champ magnétique associés au deuxième ou au premier encodeur (5, 4) saisissent n-1+Δ pôles ou paires de pôles sur toute la plage de mesure d'angles de rotation de l'ensemble de détection d'angles, Δ étant un nombre réel dont la valeur est supérieure à 0 et plus petite que 0,5 et n étant un nombre naturel.

2. Ensemble de détection d'angles selon la revendication 1, **caractérisé en ce que** les éléments (6, 7) de détection de champ magnétique sont reliés directement ou indirectement à une unité électronique de contrôle (12) configurée de manière à déterminer directement ou indirectement à partir des signaux de sortie de l'élément de détection de champ magnétique l'angle de rotation absolu (ϕ) à l'intérieur de la plage de mesure d'angle de rotation.

3. Ensemble de détection d'angles selon la revendication 1 ou 2, **caractérisé en ce que** le premier encodeur magnétique (4) est fixé sur la première roue dentée (2) en particulier concentriquement à cette dernière et **en ce que** le deuxième encodeur magnétique (5) est fixé sur la deuxième roue dentée (3) et en particulier concentriquement par rapport à cette dernière.

4. Ensemble de détection d'angles selon au moins l'une des revendications 1 à 3, **caractérisé en ce que** le premier encodeur magnétique (4) est configuré comme encodeur multipolaire et le deuxième encodeur magnétique (5) comme encodeur bipolaire.

5. Ensemble de détection d'angles selon au moins l'une des revendications 1 à 4, **caractérisé en ce qu'**il comporte une unité de traitement de signaux qui présente au moins deux canaux de traitement de signaux, le ou les éléments (6) de détection de champ magnétique associés au premier encodeur (4) étant raccordés à un premier canal de traitement de signaux et le ou les éléments (7) de détection de champ magnétique associés au deuxième encodeur (5) étant raccordés à un deuxième canal de traitement de signaux, les deux canaux de traitement de signaux étant raccordés par leur sortie à un multiplexeur (10) qui est relié à un convertisseur analogique-numérique (11) dont la sortie est reliée à une unité de calcul (12) qui calcule un angle de rotation (ϕ₁, ϕ₂) du premier et du deuxième encodeur (4, 5) et/ou qui calcule l'angle de rotation absolu (ϕ) de l'arbre (1) à partir des angles de rotation (ϕ₁, ϕ₂) du premier et du deuxième encodeur.

6. Ensemble de détection d'angles selon au moins l'une des revendications 1 à 5, **caractérisé en ce que** le rapport commun de transmission de la première et de la deuxième roue dentée (2, 3) et le nombre de pôles ou de paires de pôles du premier et du deuxième encodeur magnétique (4, 5) sont configurés de telle sorte qu'une valeur supérieure à 0 et inférieure à 0,04 soit associée à Δ.

7. Ensemble de détection d'angles selon au moins l'une des revendications 1 à 6, **caractérisé en ce que** le rapport commun de transmission de la première et de la deuxième roue dentée (2, 3) et le nombre de pôles ou de paires de pôles du premier et du deuxième encodeur magnétique (4, 5) sont configurés de telle sorte qu'une valeur comprise entre 8 et 60 soit associée à n.

8. Ensemble de détection d'angles selon au moins l'une des revendications 1 à 7, **caractérisé en ce que** le premier encodeur (4) a une forme annulaire.

9. Ensemble de détection d'angles selon au moins l'une des revendications 1 à 8, **caractérisé en ce que** la première et la deuxième roue dentée (2, 3) présentent une denture oblique et/ou **en ce que** l'ensemble de détection d'angles présente une troisième roue dentée qui est disposée coaxialement par rapport à la deuxième roue dentée (3) et qui s'engage en même temps que la deuxième roue dentée (3) sur la première roue dentée (2) au moyen d'une précontrainte élastique.

10. Ensemble de détection d'angles selon au moins l'une des revendications 1 à 9, **caractérisé en ce que** des plans principaux de sensibilité des éléments (6, 7) de détection de champ magnétique sont disposés essentiellement dans un plan commun.

11. Ensemble de détection d'angles selon au moins l'une des revendications 1 à 10, **caractérisé en ce qu'**il présente un boîtier (8) dont au moins une partie est blindée magnétiquement.

12. Ensemble de détection d'angles selon au moins l'une des revendications 1 à 11, **caractérisé en ce que** le premier et/ou le deuxième encodeur magnétique (4, 5) sont configurés de telle sorte que la direction de magnétisation (22) de parties situées à l'intérieur d'au moins l'un des pôles (21, 24) le long de la trace d'encodeur (21, 23) soit orientée de manière à varier de manière essentiellement constante et/ou monotone et/ou de manière à s'étendre en continu.

13. Ensemble de détection d'angles selon la revendication 12, **caractérisé en ce que** la variation des directions de magnétisation (22) de parties voisines d'un ou plusieurs pôles (21, 24) le long de la trace d'encodeur (21, 23) est orientée de manière essentiellement linéaire par rapport à une modification correspondante de la longueur du parcours le long de la trace d'encodeur (21, 23).

14. Ensemble de détection d'angles selon la revendication 12 ou 13, **caractérisé en ce qu'**au moins à l'intérieur des parties, dans un segment central (25) d'un pôle (24) qui comprend 50 % de la longueur de ce pôle le long de la trace d'encodeur (21, 23) et qui est délimité de chaque côté par deux segments de bordure (26) de ce pôle (24) qui comprennent chacun 25% de la longueur du pôle, les directions de magnétisation (22) de ces parties représentent dans le segment central (25) de ce pôle essentiellement une rotation d'au moins 45° et en particulier d'au moins 70° et/ou **en ce que** les directions de magnétisation (22) des deux parties latérales extérieures (27) du segment central (25) de ce pôle sont tournées l'une vers l'autre ou l'une par rapport à l'autre d'au moins 45° et en particulier d'au moins 70°, les directions de magnétisation étant toujours rapportées à la direction d'extension de la trace d'encodeur.

15. Utilisation de l'ensemble de détection d'angles selon au moins l'une des revendications 1 à 14 comme ensemble de détection d'angles de braquage d'un véhicule automobile.
